# EUROPÄISCHE PATENTSCHRIFT

(11) **EP 2 353 852 B1**
(45) Veröffentlichungstag und Bekanntmachung des Hinweises auf die Patenterteilung: **18.05.2016**
(21) Anmeldenummer: 10015800.5
(22) Anmeldetag: 18.12.2010
(51) Int. Cl.: B30B 11/08, B30B 11/00, B30B 11/02

(54) **Rundläufer-Tablettenpresse und Verfahren zum Pressen von Tabletten in einer Rundläufer-Tablettenpresse**
Rotary tablet press and method for compacting tablets in a rotary tablet press
Presse rotative pour comprimés et procédé de compression de comprimés dans une presse rotative

(30) Priorität: 27.01.2010 DE 102010005780
(43) Veröffentlichungstag der Anmeldung: 10.08.2011
(73) Patentinhaber: Fette Compacting GmbH, 21493 Schwarzenbek (DE)
(72) Erfinder: Schmidt, Ingo, 21493 Schwarzenbek (DE); Naeve, Jan, 23899 Gudow (OT Kehrsen) (DE); Heinrich, Thomas, 21435 Stelle (DE)
(74) Vertreter: Hauck Patentanwaltspartnerschaft mbB

(56) Entgegenhaltungen:
- EP-A2- 1 470 908
- WO-A1-01/21388
- US-A1- 2003 041 748
- US-A1- 2007 241 127
- US-A1- 2008 213 358

## Beschreibung

Die Erfindung betrifft eine Rundläufer-Tablettenpresse, umfassend einen drehend antreibbaren Rotor, der eine Matrizenscheibe mit Matrizenbohrungen und mit der Matrizenscheibe synchron umlaufende, den Matrizenbohrungen zugeordnete Ober- und Unterstempel aufweist, deren axiale Bewegung von oberen und unteren Steuerkurven gesteuert wird, mindestens eine Füllstation mit mindestens einer Fülleinrichtung zum Befüllen der Matrizenbohrungen mit zu verpressendem Material, mindestens eine der Füllstation in Drehrichtung des Rotors nachgeordnete Pressstation mit mindestens einer Presseinrichtung, die die Ober- und/oder Unterstempel beim Durchlaufen der Pressstation in die Matrizenbohrungen drückt, um das in die Matrizenbohrungen gefüllte Material zu verpressen, und mindestens eine der Pressstation in Drehrichtung des Rotors nachgeordnete Auswerferstation mit einer Auswerfereinrichtung zum Auswerfen der in den Matrizenbohrungen gepressten Tabletten.

Die Erfindung betrifft außerdem ein Verfahren zum Pressen von Tabletten in einer Rundläufer-Tablettenpresse, umfassend die Schritte: ein Rotor, der eine Matrizenscheibe mit Matrizenbohrungen und mit der Matrizenscheibe synchron umlaufende, den Matrizenbohrungen zugeordnete Ober- und Unterstempel, deren axiale Bewegung von Steuerkurven gesteuert wird, aufweist, wird drehend angetrieben, im Zuge ihrer Rotation werden die Matrizenbohrungen in mindestens einer Füllstation mit zu verpressendem Material befüllt, in mindestens einer der Füllstation in Drehrichtung des Rotors nachgeordneten Pressstation werden die Ober- und/oder Unterstempel in die Matrizenbohrungen gedrückt, wobei das in die Matrizenbohrungen gefüllte Material verpresst wird, in mindestens einer der Pressstation in Drehrichtung des Rotors nachgeordneten Auswerferstation werden die in den Matrizenbohrungen gepressten Tabletten ausgeworfen.

Derartige Tablettenpressen wie veroffentlicht in EP 1 470 908 A2, besitzen üblicherweise ein Maschinengestell, in dem der Rotor drehbar angeordnet ist. Der Rotor ist mit einer Anzahl Matrizen und einer gleichen Anzahl Ober- und Unterstempeln bestückt. An einem äußeren Teilkreis befindet sich üblicherweise eine Matrizenfülleinrichtung, eine Dosierstation, eine Vor- und Hauptdruckstation und eine Auswerferstation zum Auswerfen der verpressten Tabletten. Die Vor- und Hauptdruckstationen können beispielsweise jeweils eine obere und untere Druckrolle aufweisen. Dabei beginnt der Verdichtungsvorgang des in die Matrizenbohrungen gefüllten beispielsweise pulverförmigen Materials bereits in dem Bereich, in dem die entsprechende Steuerkurve den Stempel in die Matrizenbohrung führt. Dieser Verdichtungsvorgang wird dann unter einer vergleichsweise geringen Presskraft in der Vordruckstation fortgeführt. In der Hauptdruckstation wird die Verpressung dann mit einer wesentlich größeren Presskraft als in der Vordruckstation vollendet. Das mechanische Verformungsverhalten von Pressmassen und Granulaten kann sehr unterschiedlich sein und hängt in erheblicher Weise von den jeweiligen Pulvermischungen aus Wirkstoff, Bindemittel, Sprengmittel, Füllmittel, Schmiermittel usw. ab. Ein Problem beim Pressen von Tabletten in derartigen Tablettenpressen besteht in dem sogenannten Deckeln, bei dem es während des Ausstoßens der Tabletten aus den Matrizenbohrungen zu Rissbildungen innerhalb der Presslinge kommt. Ein weiteres Problem besteht darin, dass die geforderte Bruchfestigkeit der zu pressenden Tabletten nicht immer erreicht wird. Es ist bislang versucht worden, diesen Problemen durch eine Variation der Vorpresskraft in der Vorpressstation entgegenzuwirken. Die bekannte Vorgehensweise führt allerdings in der Praxis nicht immer zu zufriedenstellenden Ergebnissen. Ausgehend von dem erläuterten Stand der Technik liegt der Erfindung daher die Aufgabe zugrunde, eine Rundläufer-Tablettenpresse und ein Verfahren der eingangs genannten Art bereitzustellen, mit denen Tabletten gepresst werden können, die jederzeit die geforderte Bruchfestigkeit besitzen, wobei eine Rissbildung zuverlässig verhindert wird.

Diese Aufgabe wird gemäß der Erfindung durch die Gegenstände der Ansprüche 1 und 5 gelöst. Vorteilhafte Ausgestaltungen finden sich in den abhängigen Ansprüchen, der Beschreibung und den Figuren.

Für eine Rundläufer-Tablettenpresse der eingangs genannten Art löst die Erfindung die Aufgabe dadurch, dass in Umlaufrichtung der Ober- und Unterstempel zwischen der Füllstation und der Auswerferstation mindestens ein Schwingungserzeuger vorgesehen ist, der die Ober- und/oder Unterstempel zumindest an der Pressstation und/oder an der Füllstation und/oder an mindestens einer oberen Steuerkurve und/oder an mindestens einer unteren Steuerkurve zumindest zeitweise in Schwingungen versetzt. Für ein Verfahren der eingangs genannten Art löst die Erfindung die Aufgabe entsprechend dadurch, dass die Ober- und/oder Unterstempel in Umlaufrichtung zwischen der Füllstation und der Auswerferstation zumindest an der Pressstation und/oder an der Füllstation und/oder an mindestens einer oberen Steuerkurve und/oder an mindestens einer unteren Steuerkurve zumindest zeitweise in Schwingungen versetzt werden.

Der Rotor ist beispielsweise in einem Maschinengestell gelagert und um eine vertikale Achse drehend antreibbar. Die Anzahl der Ober- und Unterstempel entspricht der Anzahl Matrizenbohrungen des Rotors. Die Ober- und Unterstempel sind üblicherweise in Führungen geführt. Sie werden beim Umlaufen mit dem Rotor in an sich bekannter Weise durch Steuerkurven gesteuert. Das zu verpressende Material kann pulverförmig sein. Es können beispielsweise pharmazeutische Tabletten gepresst werden. Der Füllstation nachgeordnet ist üblicherweise noch eine Dosierstation. Die Füllstation, die Dosierstation und die Pressstation befinden sich an einem äußeren Teilkreis des Rotors in Flucht zu Stempeln und Matrizenbohrungen. Teilweise wird in der Pressstation nur der Oberstempel nach unten in die Matrizenbohrung gedrückt, während der Unterstempel in einer festen in der Matrizenbohrung befindlichen Stellung gehalten wird. Es ist aber auch möglich, dass in der Pressstation Ober- und Unterstempel in den Bohrungen gleichzeitig oder nacheinander aufeinander zu bewegt werden. In beiden Fällen erfolgt so das Verpressen des auf dem Unterstempel in der Matrizenbohrung befindlichen Materials. In den Matrizenbohrungen können Hülsen bzw. Matrizen angeordnet sein, die dann mit dem zu verpressenden Material gefüllt werden. In der Auswerferstation werden die Oberstempel in an sich bekannter Weise von den Matrizenbohrungen nach oben entfernt und die Unterstempel durch die Matrizenbohrungen nach oben geführt, wobei sie die in den Bohrungen verpressten Tabletten auf die Oberfläche der Matrizenscheibe bewegen. Von dort werden sie beispielsweise durch einen Abstreifer z.B. einem Ablauf zugeführt, der sie aus der Presse leitet und der weiteren Verwendung, wie z.B. einer Verpackung, zuführt. Natürlich können auch jeweils z.B. zwei Füll- und Pressstationen und gegebenenfalls Auswerferstationen an der Presse vorgesehen sein.

Der Verdichtungsvorgang des in die Matrizenbohrungen gefüllten beispielsweise pulverförmigen Materials lässt sich in mehrere Phasen unterteilen. In einer ersten Phase erfolgt eine Umorientierung der Teilchen. In einer zweiten Phase erfolgt eine elastische und plastische Deformation der Teilchen. In der dritten und abschließenden Pressphase erfolgt eine Bindung der Teilchen aneinander. Der Erfindung liegt die Erkenntnis zugrunde, dass während dieser Phasen erzeugte innere Spannungen in den verpressten Tabletten zu den eingangs erwähnten Rissbildungen und Bruchfestigkeitsproblemen führen können. Weiter ist erfindungsgemäß erkannt worden, dass diese inneren Spannungen durch Lufteinschlüsse während des Pressvorgangs entstehen können. Um diese Lufteinschlüsse zu vermeiden, wird erfindungsgemäß während des Verdichtungsvorgangs des in den Matrizenbohrungen befindlichen Materials, z.B. Pulvers, der das Material verdichtende Ober- und/oder Unterstempel in Vibration versetzt. Dazu ist in dem Bereich zwischen der Fülleinrichtung und der Auswerferstation ein oder mehrere Schwingungserzeuger angeordnet. Die Stempel können von diesem insbesondere zu Schwingungen in vertikaler Richtung angeregt werden. Es sind aber zusätzlich oder alternativ auch Schwingungsanregungen in andere Richtungen denkbar. Die Vibration der Stempel kann insbesondere während einer Hauptpressphase in einer Hauptpressstation erfolgen. Sie kann aber auch bereits in der Vorpressphase in einer Vorpressstation erfolgen. Es ist erfindungsgemäß insbesondere erkannt worden, dass bereits beim Eintreten der Oberstempel in die Matrizenbohrungen vor dem Erreichen einer Vorpressstation, gesteuert durch eine entsprechende Steuerkurve (Niederzugskurve) eine Vibration der Stempel vorteilhaft ist. Die Vibration führt dazu, dass sich das in den Matrizenbohrungen bzw. den Matrizen befindliche Material homogener verteilt und auf diese Weise Lufteinschlüsse sicher vermieden werden. Dadurch wiederum werden Risse in den Presslingen beim Ausstoßen aus den Matrizen verhindert. Insbesondere werden die zu verpressenden Pulverteilchen in den oben beschriebenen drei Verdichtungsphasen optimal verteilt und aneinander gebunden. Gleichzeitig kann auf diese Weise jederzeit die geforderte Bruchfestigkeit der Tabletten sichergestellt werden.

Die Anordnung des oder der Schwingungserzeuger ist an unterschiedlichen Orten im Wesentlichen entlang der gesamten vertikalen Kraftverlaufsachse möglich. Die vertikale Kraftverlaufsachse erstreckt sich in vertikaler Richtung entlang der gesamten Presse, beispielsweise durch die Zentren gegebenenfalls vorgesehener oberer und unterer Niederzugskurven oder Vor- oder Hauptdruckrollen. Beispielsweise führt eine Anregung der Niederzugskurven sowie der Vordruck- oder Hauptdruckrollen zu Schwingungen ebenfalls zu einer Schwingung der durch diese gesteuerten Ober- und Unterstempel. Es kann eine geeignete Steuereinrichtung vorgesehen sein. Sie steuert den oder die Schwingungserzeuger in der erfindungsgemäßen Weise an.

Erfindungsgemäß werden somit Lufteinschlüsse weitgehend vermieden. Dadurch werden innere Spannungen in den Presslingen vermieden und die Deckelneigung ist ebenfalls verringert. Dadurch wiederum wird Tablettenausschuss minimiert. Gleichzeitig wird mit einer geringeren Presskraft eine höhere und insbesondere die jeweils erforderliche Bruchhärte erreicht. Dies wiederum führt zu einer verbesserten Laufruhe der Presse und damit zu geringeren Schallemissionen. Auch wird dadurch der Verschleiß insbesondere der Presseinrichtungen, wie Druckrollen, und der mit diesen zusammenwirkenden Stempelköpfe reduziert. Der Energieaufwand pro hergestellte Tablette kann verringert werden, wodurch es auch zu einer Kostensenkung kommt. Auch besteht erfindungsgemäß die Möglichkeit der Direktverpressung. So wird im Stand der Technik das zu verpressende Pulver häufig vorab einem Granulierverfahren zugeführt, um die anschließende Tablettierbarkeit der Pressmassen in der Presse zu verbessern. Auf dieses aufwendige Granulierverfahren kann erfindungsgemäß verzichtet werden.

Nach einer Ausgestaltung kann mindestens ein Schwingungserzeuger im Bereich einer oberen und/oder unteren Steuerkurve für die Ober- und/oder Unterstempel zwischen der Füllstation und der Pressstation, also insbesondere einer Niederzugskurve, angeordnet sein, der die Ober- und/oder Unterstempel während des Durchlaufens dieser oberen und/oder unteren Steuerkurve zumindest zeitweise in Schwingungen versetzt. Mit dieser Ausgestaltung wird der Erkenntnis Rechnung getragen, dass bereits beim Eintritt der Stempel in die Matrizenbohrungen eine Stempelvibration vorteilhaft ist.

Nach einer weiteren Ausgestaltung kann die Pressstation mindestens eine obere und eine untere Druckrolle aufweisen, die die Ober- und/oder Unterstempel bei ihrem Durchlaufen der Pressstation in die Matrizenbohrungen drücken. In der Vorpressstation kann ein Vorverdichten des zu verpressenden Materials mit einer verhältnismäßig geringen Presskraft erfolgen. In der Hauptpressstation erfolgt die Fertigstellung der Verpressung mit einer erheblich höheren Presskraft als in der Vorpressstation. In diesem Fall kann die Vorpressstation entsprechend eine obere und untere Vordruckrolle und die Hauptpressstation eine obere und untere Hauptdruckrolle aufweisen. Anstelle der Druckrollen können grundsätzlich jedoch auch beispielsweise Druckschienen oder Kurvenbahnen eingesetzt werden. Es ist jedoch auch ein Verzicht auf die Vorpressstation denkbar.

Nach dem erfidungsgemäßen Ausgestaltung ist mindestens ein Schwingungserzeuger an der Pressstation angeordnet, der die Ober- und/oder Unterstempel in der Pressstation zumindest zeitweise in Schwingungen versetzt. Sofern die Pressstation eine Vorpressstation und eine Hauptpressstation aufweist, ist mindestens ein Schwingungserzeuger an der Vorpressstation und/oder der Hauptpressstation angeordnet, der die Ober- und/oder Unterstempel in der Vorpressstation und/oder der Hauptpressstation zumindest zeitweise in Schwingungen versetzt. Der oder die Schwingungserzeuger können insbesondere entlang einer durch die Zentren der oberen und unteren Vordruck- und/oder Hauptdruckrollen verlaufenden vertikalen Achse, angeordnet sein, so dass die Stempel beim Durchlaufen der Vordruck- und/oder Hauptdruckrollen in Schwingungen versetzt werden. Insbesondere kann also die den oder die Schwingungserzeuger enthaltende vertikale Kraftverlaufsachse durch die Vorpress- oder Hauptpressstation verlaufen.

Die erfindungsgemäßen Schwingungsaktoren können verschiedenster Art sein. Denkbar sind beispielsweise Ultraschallschwingungserzeuger und/oder elektrische Schwingungserzeuger und/oder mechanische Schwingungserzeuger. Als elektrische Schwingungsaktoren kommen zum Beispiel piezoelektrische Elemente in Frage.

Die Schwingungen der Ober- und/oder Unterstempel werden dem eigentlichen Presskraftverlauf während der Verdichtung des in den Matrizen befindlichen Materials überlagert und besitzen eine höhere Frequenz als der Presskraftverlauf. Insbesondere kommt es beim Verpressen zunächst zu einem Anstieg der Presskraft beim Einfahren des Oberstempels in die Matrize bis zu einem Maximum, wenn das Material durch den Stempel vollständig verdichtet ist. Beim anschließenden Herausfahren des Oberstempels aus der Matrize nimmt die Presskraft entsprechend wieder ab. Dieser Presskraftverlauf wiederholt sich von Stempelpaar zu Stempelpaar und besitzt insgesamt den Verlauf einer normierten Sinuskurve. Die den Ober- oder Unterstempeln aufgezwungen Schwingungsfrequenz sollte wesentlich höher als die Frequenz des Presskraftverlaufs sein, um die erfindungsgemäßen Vorteile zu erreichen. Die geeignete Schwingungsfrequenz hängt beispielsweise von den Eigenschaften des zu verpressenden Materials, den im Rahmen der Verpressung auftretenden Kompaktierungskräften und der Rotordrehzahl ab. Lediglich beispielhaft seien Schwingungsfrequenzen im Bereich von 50 Hz bis 50 kHz.

Nach einer weiteren Ausgestaltung können die Ober- und/oder Unterstempel während des gesamten Verpressens des in die Matrizenbohrungen gefüllten Materials in Schwingungen versetzt werden. Die Schwingungserzeuger werden dann entsprechend von einer Steuereinrichtung in dieser Weise angesteuert. Gemäß dieser Ausgestaltung wird der gesamte Verdichtungsvorgang in den Matrizen in der erfindungsgemäßen Weise vorteilhafte beeinflusst. Sofern eine Vor- und Hauptpressstation vorgesehen sind, können die Stempel dann beispielsweise während des gesamten Verpressens in Vor- und Hauptpressstation und bereits beim Durchlaufen einer Niederzugskurve in Schwingungen versetzt werden. Es ist aber auch möglich, dass die Stempel beispielsweise nur während des Verpressens in der Hauptpressstation in Schwingungen versetzt werden.

Ein Ausführungsbeispiel der Erfindung wird nachfolgend anhand von Figuren näher erläutert. Es zeigen schematisch:
- Fig. 1: einen Teil einer erfindungsgemäßen Rundläufer-Tablettenpresse in einer zur Veranschaulichung abgewickelten Darstellung in einer vertikalen Schnittansicht,
- Fig. 2: ein Diagramm zur Veranschaulichung der Phasen eines Verdichtungsvorgangs, und
- Fig. 3: die in Fig. 1 gezeigte Rundläufer-Tablettenpresse in einer weiteren vertikalen Schnittansicht.

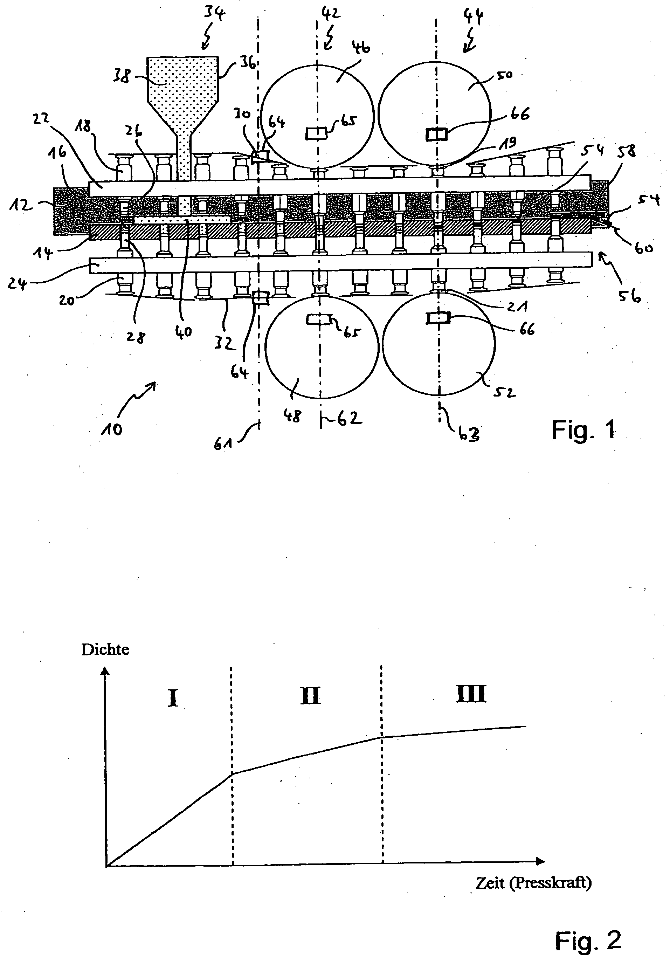

Soweit nichts anderes angeben ist, bezeichnen in den Figuren gleiche Bezugszeichen gleiche Gegenstände. In Fig. 1 ist eine erfindungsgemäße Tablettenpresse 10 ausschnittsweise und zur Veranschaulichung in einer Rotorabwicklung gezeigt. Der schematisch gezeigte Rotor 12 besitzt eine Matrizenscheibe 14 mit einer Mehrzahl von Matrizenbohrungen 16. Jeder der Matrizenbohrungen 16 ist ein Paar aus Oberstempel 18 und Unterstempel 20 zugeordnet, die jeweils in einer oberen Führungsscheibe 22 und einer unteren Führungsscheibe 24 geführt sind und synchron mit der Matrizenscheibe 14 umlaufen. Die Ober- und Unterstempel 18, 20 sind dabei so angeordnet, dass sie mit ihrem jeweiligen Pressbereich 26, 28 in die Matrizenbohrungen 16 geführt werden können. In den Matrizenbohrungen 16 können sich Matrizen befinden. Die Bewegung der Ober- und Unterstempel 18, 20 wird durch mit den Köpfen der Stempel 18, 20 zusammenwirkende obere und untere Steuerkurven 30, 32 gesteuert. Dies ist an sich bekannt. Die in Fig. 1 gezeigte Presse 10 besitzt weiterhin eine Füllstation 34 mit einer Fülleinrichtung 36. Die Fülleinrichtung 36 besitzt einen trichterförmigen Vorratsbehälter 38, in dem sich zu verpressendes pulverförmiges Tablettenmaterial befindet. Der Sammelbehälter 38 steht in Verbindung mit einem auf der Oberseite der Matrizenscheibe 14 aufliegenden Füllschuh 40. Wird der Rotor 12 um eine vertikale Drehachse rotierend angetrieben, bewegen sich in dem gezeigten Beispiel der Ober- und Unterstempel 18, 20 gemeinsam mit der Matrizenscheibe 14 in Fig. 1 von links nach rechts. Dabei durchlaufen sie die Füllstation 34 und laufen insbesondere unterhalb des Füllschuhs 40 durch diesen hindurch. Dabei kommt es zu einem Befüllen der Matrizenbohrungen 16. Die Füllhöhe wird dabei durch die durch die unteren Steuerkurven 32 vorgegebene vertikale Position der Unterstempel 20 festgelegt.

In Drehrichtung des Rotors 12 der Füllstation 34 nachgeordnet befinden sich eine Vorpressstation 42 und eine Hauptpressstation 44. Die Vorpressstation 42 besitzt eine obere Vordruckrolle 46 und eine untere Vordruckrolle 48. Die Hauptpressstation 44 besitzt entsprechend eine obere Hauptdruckrolle 50 und eine untere Hauptdruckrolle 52. Die Druckrollen 46, 48, 50, 52 wirken in an sich bekannter Weise mit den Stempelköpfen der Ober- und Unterstempel 18, 20 zusammen. In dem gezeigten Beispiel bewegen sich die Oberstempel 18 im Zuge ihres Eintritts in die Vorpressstation 42 nach unten auf die ihnen jeweils zugeordnete Matrizenbohrung 16 zu. Durch die obere Vordruckrolle 46 werden die Oberstempel 18 dann in die Bohrungen 16 gedrückt. Die Unterstempel 20 werden gleichzeitig von der unteren Vordruckrolle 48 in ihrer vertikalen Position gehalten. Dadurch kommt es zu einer Vorverdichtung des in den Bohrungen 16 befindlichen pulverförmigen Materials mit einer vergleichsweise geringen Presskraft. In der nachfolgenden Hauptpressstation 44 erfolgt die endgültige Verdichtung des pulverförmigen Materials. Insbesondere werden in dem dargestellten Beispiel die Unterstempel 20 von der unteren Hauptdruckrolle 52 in vertikaler Richtung nach oben in die Matrizenbohrungen 16 gedrückt. Die obere Hauptdruckrolle 50 hält dabei die Oberstempel 18 in ihrer jeweiligen vertikalen Position. Damit kommt es zu einer abschließenden Verpressung des in den Matrizenbohrungen 16 befindlichen Materials zu den herzustellenden Tabletten 54. An einer Auswerferstation 56 werden die Presslinge anschließend ausgeworfen. Dazu werden zunächst gesteuert durch die obere und untere Steuerkurve 30, 32 die Oberstempel 18 nach oben von den Matrizenbohrungen 16 abgehoben. Gleichzeitig werden die Unterstempel 20 durch die Matrizenbohrungen 16 hindurch nach oben geschoben, so dass sie die Tabletten 54 auf die Oberfläche der Matrizenscheibe 14 transportieren. Die Auswerferstation weist eine Auswerfereinrichtung 58, vorliegend einen Abstreifer 58, auf, der die Tabletten 54 einem Ablauf 60 zuführt. Von dort werden sie aus der Presse 10 herausgeführt und der weiteren Verwendung, z.B. einer Verpackung, zugeführt. Selbstverständlich können auch beispielsweise zwei um etwa 180° entlang des Rotors 12 zueinander versetzte Fülleinrichtungen und entsprechend jeweils zwei Vor- und Hauptpressstationen vorgesehen sein. Dieser Aufbau und die Funktion einer Tablettenpresse 10 sind an sich bekannt.

In Fig. 2 ist in einem Diagramm die Dichte des in den Matrizenbohrungen 16 verpressten Materials während eines Pressvorgangs über der Zeit und damit auch über der sich mit der Zeit ändernden Presskraft aufgetragen. Dargestellt ist der zeitliche Verlauf vom Beginn der Verpressung beim Eintritt der Oberstempel 18 in die Matrizenbohrungen vor der Vorpressstation 42 bis zu der maximalen Verpressung, also bis die jeweiligen Oberstempel 18 vollständig in die Matrizenbohrung 16 eingefahren sind. Zu erkennen sind drei Phasen. In der mit I gekennzeichneten ersten Phase erfolgt eine Umorientierung der in den Bohrungen 16 befindlichen Teilchen. In der mit II gekennzeichneten zweiten Phase erfolgt eine elastische und plastische Deformation der Teilchen. In der abschließenden, mit III gekennzeichneten dritten Phase erfolgt die Bindung der Teilchen aneinander. Um in den Verdichtungsphasen I bis III die in den Matrizenbohrungen 16 befindlichen Pulverteilchen optimal zu verteilen und aneinander zu binden, sind bei der in den Figuren gezeigten Rundläufer-Tablettenpresse 10 entlang der in Fig. 1 bei den Bezugszeichen 61, 62, 63 gezeigten, in vertikaler Richtung durch die die Oberstempel 18 (und geringfügig auch die Unterstempel 20) in die Matrizenbohrungen führenden Steuerkurven 30, 32 zwischen der Fülleinrichtung 34 und der Vorpressstation 42, sowie durch die Rotationsachsen der Vordruckrollen 46, 48 und Hauptdruckrollen 50, 52 verlaufenden vertikalen Kraftverlaufsachsen jeweils obere und untere Schwingungserzeuger 64, 65, 66 vorgesehen. Die Schwingungserzeuger 64, 65, 66 können z.B. Ultraschallaktoren, Elektroaktoren und/oder mechanische Schwingungsaktoren sein. Erste Schwingungsaktoren 64 sind der oberen und unteren Steuerkurve 30, 32 zugeordnet. Zweite und dritte Schwingungsaktoren 65, 66 sind jeweils den oberen und unteren Vordruckrollen 46, 48 und den oberen und unteren Hauptdruckrollen 50, 52 zugeordnet. Die Schwingungserzeuger 64, 6566 führen in dem gezeigten Beispiel zu Schwingungen der Steuerkurven 30, 32 und Druckrollen 46, 48, 50, 52 und damit auch der mit diesen beim Durchlaufen der Steuerkurven 30, 32 bzw. Vordruck- und Hauptpressstationen 42, 44 über ihre Stempelköpfe 19, 21 in Eingriff stehenden Oberstempel 18 und Oberstempel 20. Die Ober- und Unterstempel 18, 20 werden dabei zu Schwingungen in vertikaler Richtung angeregt. Zum Ansteuern der Schwingungserzeuger 64, 65, 66 kann eine geeignete Steuereinrichtung vorgesehen sein (nicht gezeigt). Es versteht sich, dass die in Fig. 1 gezeigten Schwingungserzeuger 64, 65, 66 nicht notwendigerweise sämtlich vorgesehen sein müssen. Vielmehr sind beliebige Kombinationen der Schwingungserzeuger 64, 65, 66 denkbar, sei dies das Vorsehen von Schwingungserzeugern nur im Bereich der Steuerkurven 30, 32 und/oder nur im Bereich der Vordruck- und/oder Hauptdruckrollen (46, 48, 50, 52) oder sei dies das Vorsehen von nur oberen oder nur unteren Schwingungserzeugern an einer oder mehrerer der mit Schwingungserzeugern versehenen Bereichen der Presse.

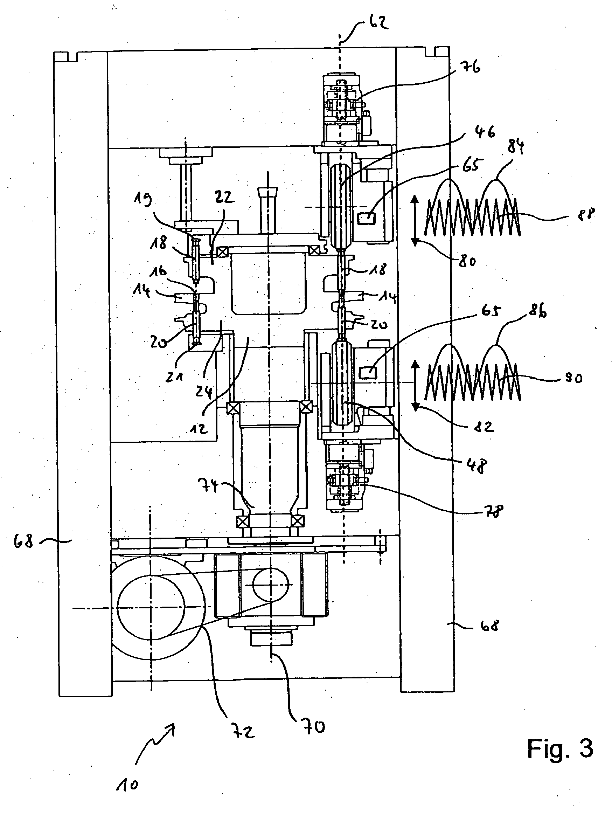

Die Schwingungserzeugung soll anhand der in Fig. 3 gezeigten Darstellung näher erläutert werden. In Fig. 3 ist die in Fig. 1 ausschnittsweise gezeigte Tablettenpresse 10 in einer weiteren vertikalen Schnittansicht gezeigt. Zu erkennen ist ein Maschinengestell 68, an dem der Rotor 12 um die vertikale Achse 70 drehend gelagert ist. Zur Drehung des Rotors 12 ist ein schematisch bei dem Bezugszeichen 72 gezeigter Riemenantrieb vorgesehen. Über ein geeignetes Getriebe 74 wird die Drehbewegung des Riemenantriebs 72 in an sich bekannter Weise auf den Rotor 12 übertragen. Weiterhin ist in Fig. 3 zu erkennen, dass die hier beispielhaft gezeigte obere Vordruckrolle 46 mit einer oberen Krafterzeugungseinrichtung 76 und die untere Vordruckrolle 48 mit einer unteren Krafterzeugungseinrichtung 78 zusammenwirkt. Über diese Krafterzeugungseinrichtungen 76, 78 werden die entsprechenden Presskräfte auf die Vordruckrollen 46, 48 ausgeübt. Durch die Schwingungaktoren 65 werden die Druckrollen 46, 48 entlang der vertikalen Kraftverlaufsachse 62 zu vertikalen Schwingungen angeregt, wie dies durch die Pfeile 80, 82 in Fig. 3 veranschaulicht ist. Bei den Bezugszeichen 84, 86 ist jeweils der Presskraftverlauf beim Verpressen von Tabletten in den Matrizenbohrungen 16 schematisch angedeutet. Zu erkennen ist, dass der Presskraftverlauf die Form einer normierten Sinuskurve besitzt. Dabei repräsentiert jeder Schwingungsberg den Presskraftverlauf bei der Verpressung einer Tablette in der Vorpressstation 42. Ebenfalls in Fig. 3 zur Veranschaulichung dargestellt ist die dem Presskraftverlauf 84, 86 überlagerte, von den Schwingungserzeugern 65 erzeugte Schwingung 88, 90 der Druckrollen 46, 48 und damit der Stempel 18, 20. Die Frequenz der Schwingungen 88, 90 ist dabei wesentlich höher als die Frequenz des Presskraftverlaufs 84, 86. Das Aufbringen der Schwingungen auf die Stempel 18, 20 im Bereich der Niederzugskurven 30, 32 und der Hauptpressstation 44 kann in analoger Weise erfolgen.

Mit der erfindungsgemäßen Rundläufer-Tablettenpresse 10 und dem erfindungsgemäßen Verfahren können in zuverlässiger Weise Tabletten der jeweils geforderten Bruchhärte hergestellt werden, wobei die Neigung zur Rissbildung erheblich verringert ist. Gleichzeitig erfolgt die Herstellung der Tabletten kostengünstiger und mit weniger Schallemissionen.

## Patentansprüche

1. Rundläufer-Tablettenpresse, umfassend:
- einen drehend antreibbaren Rotor (12), der eine Matrizenscheibe (14) mit Matrizenbohrungen (16) und mit der Matrizenscheibe (14) synchron umlaufende, den Matrizenbohrungen (16) zugeordnete Ober- und Unterstempel (18, 20) aufweist, deren axiale Bewegung von oberen und unteren Steuerkurven (30, 32) gesteuert wird,
- mindestens eine Füllstation (34) mit mindestens einer Fülleinrichtung (36) zum Befüllen der Matrizenbohrungen (16) mit zu verpressendem Material,
- mindestens eine der Füllstation (34) in Drehrichtung des Rotors (12) nachgeordnete Pressstation (42, 44) mit mindestens einer Presseinrichtung (46, 48, 50, 52), die die Ober- und/oder Unterstempel (18, 20) beim Durchlaufen der Pressstation (42, 44) in die Matrizenbohrungen (16) drückt, um das in die Matrizenbohrungen (16) gefüllte Material zu verpressen, wobei die Pressstation (42, 44) eine Vorpressstation (42) mit einer oberen und unteren Vordruckrolle (46, 48) und eine Hauptpressstation (44) mit einer oberen und unteren Hauptdruckrolle (50, 52) aufweist, und
- mindestens eine der Pressstation (42, 44) in Drehrichtung des Rotors (12) nachgeordnete Auswerferstation (56) mit einer Auswerfereinrichtung (58) zum Auswerfen der in den Matrizenbohrungen (16) gepressten Tabletten (54),
- **dadurch gekennzeichnet, dass** in Umlaufrichtung der Ober- und Unterstempel (18, 20) mindestens ein Schwingungserzeuger (65, 66) an der oberen und/oder unteren Vordruckrolle der Vorpressstation (42) und/oder der oberen und/oder unteren Hauptdruckrolle der Hauptpressstation (44) angeordnet ist, der die Ober- und/oder Unterstempel (18, 20) in der Vorpressstation (42) und/oder der Hauptpressstation (44) zumindest zeitweise in Schwingungen versetzt.

2. Rundläufer-Tablettenpresse nach Anspruch 1, **dadurch gekennzeichnet, dass** mindestens ein Schwingungserzeuger (64) im Bereich einer oberen und/oder unteren Steuerkurve (30, 32) für die Ober- und/oder Unterstempel (18, 20) zwischen der Füllstation (34) und der Pressstation (42, 44) angeordnet ist, der die Ober- und/oder Unterstempel (18, 20) während des Durchlaufens dieser oberen und/oder unteren Steuerkurve (30, 32) zumindest zeitweise in Schwingungen versetzt.

3. Rundläufer-Tablettenpresse nach einem der vorhergehenden Ansprüche, **dadurch gekennzeichnet, dass** der mindestens eine Schwingungserzeuger (64, 65, 66) ein Ultraschallschwingungserzeuger und/oder ein elektrischer Schwingungserzeuger und/oder ein mechanischer Schwingungserzeuger ist.

4. Rundläufer-Tablettenpresse nach einem der vorhergehenden Ansprüche, **dadurch gekennzeichnet, dass** der Schwingungserzeuger (64, 65, 66) dazu ausgelegt ist, die Ober- und/oder Unterstempel (18, 20) während des gesamten Verpressens des in die Matrizenbohrungen (16) gefüllten Materials in Schwingungen zu versetzen.

5. Verfahren zum Pressen von Tabletten in einer Rundläufer-Tablettenpresse, umfassend die Schritte:
- ein Rotor (12), der eine Matrizenscheibe (14) mit Matrizenbohrungen (16) und mit der Matrizenscheibe (14) synchron umlaufende, den Matrizenbohrungen (16) zugeordnete Ober- und Unterstempel (18, 20), deren axiale Bewegung von oberen und unteren Steuerkurven (30, 32) gesteuert wird, aufweist, wird drehend angetrieben,
- im Zuge ihrer Rotation werden die Matrizenbohrungen (16) in mindestens einer Füllstation (34) mit zu verpressendem Material befüllt,
- in mindestens einer der Füllstation (34) in Drehrichtung des Rotors (12) nachgeordneten Pressstation (42, 44) werden die Ober- und/oder Unterstempel (18, 20) in die Matrizenbohrungen (16) gedrückt, wobei das in die Matrizenbohrungen (16) gefüllte Material verpresst wird, wobei die Pressstation (42, 44) eine Vorpressstation (42) mit einer oberen und unteren Vordruckrolle (46, 48) und eine Hauptpressstation (44) mit einer oberen und unteren Hauptdruckrolle (50, 52) aufweist,
- in mindestens einer der Pressstation (42, 44) in Drehrichtung des Rotors (14) nachgeordneten Auswerferstation (56) werden die in den Matrizenbohrungen (16) gepressten Tabletten (54) ausgeworfen,
- **dadurch gekennzeichnet, dass** die Ober- und/oder Unterstempel an der oberen und/oder unteren Vordruckrolle der Vorpressstation (42) und/oder an der oberen und/oder unteren Hauptdruckrolle der Hauptpressstation (44) zumindest zeitweise in Schwingungen versetzt werden.

6. Verfahren nach Anspruch 5, **dadurch gekennzeichnet, dass** die Ober- und/oder Unterstempel (18, 20) durch mindestens einen Ultraschallschwingungserzeuger und/oder mindestens einen elektrischen Schwingungserzeuger und/oder mindestens einen mechanischen Schwingungserzeuger in Schwingungen versetzt werden.

7. Verfahren nach einem der Ansprüche 5 oder 6, **dadurch gekennzeichnet, dass** die Ober- und/oder Unterstempel (18, 20) während des gesamten Verpressens des in die Matrizenbohrungen (16) gefüllten Materials in Schwingungen versetzt werden.

## Claims

1. A rotary tablet press comprising:
• a rotary drivable rotor (12), which comprises a die table (14) with die bores (16) and upper and lower punches (18, 20), associated to the die bores (16) and circulating synchronously with the die table (14), whose axial movement is controlled by upper and lower control cams (30, 32),
• at least one filling station (34) with at least one filling device (36) for filling the die bores (16) with the material to be compacted,
• at least one pressing station (42, 44), consecutive to the filling station (34) in the sense of rotation of the rotor (12) and having at least one pressing device (46, 48, 50, 52), which pushes the upper and/or the lower punches (18, 20) into the die bores (16) when they pass the pressing station (42, 44), in order to compact the material filled into the bores (16), wherein the pressing station (42, 44) comprises a pre-pressing station (42) with an upper and a lower pre-pressing roller (46, 48) and a main pressing station (44) with an upper and a lower main pressing roller (50, 52), and
• at least one ejection station (56), consecutive to the pressing station (42, 44) in the sense of rotation of the rotor (12) and having a ejecting device (58) for ejecting the tablets (54) compacted in the die bores (16),
• **characterised in that** in the circulating direction of the upper and lower punches (18, 20), at least one vibration generator (65, 66) is arranged on the upper and/or the lower pre-pressing roller of the pre-pressing station (42) and/or the upper and/or the lower main pressing roller of the main pressing station (44), which imparts vibrations to the upper and/or lower punches (18, 20) in the pre-pressing station (42) and/or in the main pressing station (44) at least from time to time.

2. The rotary tablet press according to claim 1, **characterised in that** at least one vibration generator (64) is arranged in the area of an upper and/or a lower control cam (30, 32) for the upper and/or lower punches (18, 20) between the filling station (34) and the pressing station (42, 44), which imparts vibrations to the upper and/or lower punches (18, 20) at least from time to time when they pass through this upper and/or lower control cam (30, 32).

3. A rotary tablet press according to any one of the preceding claims, **characterised in that** the at least one vibration generator (64, 65, 66) is an ultrasound vibration generator and/or an electric vibration generator and/or a mechanical vibration generator.

4. A rotary table press according to any one of the preceding claims, **characterised in that** the vibration generator (64, 65, 66) is designed to impart vibrations to the upper and/or lower punches (18, 20) during the entire process of compacting the material that is filled into the die bores (16).

5. A method for compacting tablets in a rotary tablet press, comprising the following steps:
• a rotor (12) is rotary driven, which comprises a die table (14) with die bores (16) and upper and lower punches (18, 20), associated to the die bores (16) and circulating synchronously with the die table (14), whose axial movement is controlled by upper and lower control cams (30, 32),
• in the course of their rotation, the die bores (16) are filled with the material to be compacted in at least one filling station (34),
• in at least one pressing station (42, 44) consecutive to the filling station (34) in the sense of rotation of the rotor (12), the upper and/or the lower punches (18, 20) are pushed into the die bores (16), the material filled into the die bores (16) being compacted in this, the pressing station (42, 44) comprising a pre-pressing station (42) with an upper and a lower pre-pressing roller (46, 48) and a main pressing station (44) with an upper and a lower main pressing roller (50, 52),
• the tablets (54) compacted in the die bores (16) are ejected in at least one ejection station (56), consecutive to the pressing station (42, 44) in the sense of rotation of the rotor (12),
• **characterised in that** vibrations are imparted to the upper and/or the lower punches on the upper and/or the lower pre-pressing roller of the pre-pressing station (42) and/or on the upper and/or the lower main pressing roller of the main pressing station (44) at least from time to time.

6. A method according to claim 5, **characterised in that** vibrations are imparted to the upper and/or the lower punches (18, 20) by at least one ultrasound vibration generator and/or at least one electric vibration generator and/or at least one mechanical vibration generator.

7. A method according to any one of claims 5 or 6, **characterised in that** vibrations are imparted to the upper and/or the lower punches (18, 20) during the entire compacting process of the material filled into the die bores (16).

## Revendications

1. Presse à comprimés rotative, comprenant :
• un rotor (12) qui peut être entrainé en rotation et qui comporte un disque de matrice (14) avec des perçages de matrice (16) et des poinçons supérieurs et inférieurs (18, 20), associés aux perçages de matrice (16) et circulant de manière synchrone au disque de matrice (14), dont le mouvement axial est contrôlé par des cames de commande supérieure et inférieure (30, 32),
• au moins un poste de remplissage (34) avec au moins un dispositif de remplissage (36) pour remplir les perçages de matrice (16) avec le matériau qu'on veut comprimer,
• au moins un poste de pression (42, 44), en aval du poste de remplissage (34) dans le sens de rotation du rotor (12) et ayant au moins un dispositif de pression (46, 48, 50, 52), qui pousse les poinçons supérieurs et/ou inférieurs (18, 20) dans les perçages de matrice (16) quand ils passent le poste de pression (42, 44) afin de comprimer le matériau rempli dans les perçages (16), le poste de pression (42, 44) comportant un pré-poste de pression (42) avec un pré-rouleau presseur supérieur et inférieur (46, 48) et un poste de pression principal (44) avec un rouleau presseur principal supérieur et inférieur (50, 52), et
• au moins un poste d'éjection (56), en aval du poste de pression (42, 44) dans le sens de rotation du rotor (12) et ayant un dispositif d'éjection (58) pour éjecter les comprimés (54) comprimés dans les perçages de matrice (16),
• **caractérisée en ce que** dans la direction de circulation des poinçons supérieurs et inférieurs (18, 20), au moins un générateur de vibrations (65, 66) est disposé sur le pré-rouleau presseur supérieur et/ou inférieur du pré-poste de pression (42) et/ou le rouleau presseur principal supérieur et/ou inférieur du poste de pression principal (44), qui impose des vibrations aux poinçons supérieurs et/ou inférieurs (18, 20) dans le pré-poste de pression (42) et/ou dans le poste de pression principal (44) au moins de temps en temps.

2. Presse à comprimés rotative selon la revendication 1, **caractérisée en ce qu'**au moins un générateur de vibrations (64) est disposé dans la région d'une came de commande supérieure et/ou inférieure (30, 32) pour les poinçons supérieurs et/ou inférieurs (18, 20) entre le poste de remplissage (34) et le poste de pression (42, 44), qui impose des vibrations aux poinçons supérieurs et/ou inférieurs (18, 20) au moins de temps en temps pendant le passage à travers cette came de commande (30, 32) supérieure et/ou inférieure.

3. Presse à comprimés rotative selon l'une quelconque des revendications précédentes, **caractérisée en ce que** l'au moins un générateur de vibrations (64, 65, 66) est un générateur de vibrations à ultrason et/ou un générateur de vibrations électrique et/ou un générateur de vibrations mécanique.

4. Presse à comprimés rotative selon l'une quelconque des revendications précédentes, **caractérisée en ce que** le générateur de vibrations (64, 65, 66) est dimensionné pour imposer des vibrations aux poinçons supérieurs et/ou inférieurs (18, 20) pendant le processus entier de la compression du matériau rempli dans les perçages de matrice (16).

5. Procédé de compression de comprimés dans une presse à comprimés rotative, comprenant les étapes suivantes :
• un rotor (12) est entraîné en rotation, qui comporte un disque de matrice (14) avec des perçages de matrice (16) et des poinçons supérieurs et inférieurs (18, 20), associés aux perçages de matrice (16) et circulant de manière synchrone au disque de matrice (14), dont le mouvement axial est contrôlé par des cames de commande supérieure et inférieure (30, 32),
• au cours de leur rotation, les perçages de matrice (16) sont remplis avec le matériau qu'on veut comprimer dans au moins un poste de remplissage (34),
• dans au moins un poste de pression (42, 44) en aval du poste de remplissage (34) dans le sens de rotation du rotor (12), les poinçons supérieurs et/ou inférieurs (18, 20) sont poussés dans les perçages de matrice (16), le matériau rempli dans les perçages de matrice (16) étant comprimé par cela, le poste de pression (42, 44) comportant un pré-poste de pression (42) avec un pré-rouleau presseur supérieur et inférieur (46, 48) et un poste de pression principal (44) avec un rouleau presseur principal supérieur et inférieur (50, 52),
• les comprimés (54) comprimés dans les perçages de matrice (16) sont éjectés dans au moins un poste d'éjection (56) en aval du poste de pression (42, 44) dans le sens de rotation du rotor (12),
• **caractérisée en ce que** des vibrations sont imposées aux poinçons supérieurs et/ou inférieurs sur le pré-rouleau presseur supérieur et/ou inférieur du pré-poste de pression (42) et/ou sur le rouleau principal supérieur et/ou inférieur du poste de pression principal (44) au moins de temps en temps.

6. Procédé selon la revendication 5, **caractérisé en ce que** des vibrations sont imposées aux poinçons supérieurs et/ou inférieurs (18, 20) par au moins un générateur de vibrations à ultrason et/ou au moins un générateur de vibrations électrique et/ou au moins un générateur de vibrations mécanique.

7. Procédé selon l'une quelconque des revendications5 ou 6, **caractérisé en ce que** des vibrations sont imposées aux poinçons supérieurs et/ou inférieurs (18, 20) pendant le processus tout entier de la compression du matériau rempli dans les perçages de matrice (16).
